# EUROPÄISCHE PATENTSCHRIFT

(11) **EP 0 433 560 B1**
(45) Veröffentlichungstag und Bekanntmachung des Hinweises auf die Patenterteilung: **15.12.1993**
(21) Anmeldenummer: 90116953.2
(22) Anmeldetag: 04.09.1990
(51) Int. Cl.: F02B 37/12, F01D 17/10, F01D 17/16, F02C 9/18, F02C 9/22

(54) **Abgasturbolader an einer Brennkraftmaschine**
Exhaust gas turbocharger for an internal combustion engine
Turbochargeur à gaz pour un moteur à combustion interne

(30) Priorität: 18.12.1989 DE 3941715
(43) Veröffentlichungstag der Anmeldung: 26.06.1991
(73) Patentinhaber: Dr.Ing.h.c. F. Porsche Aktiengesellschaft, 70435 Stuttgart (DE)
(72) Erfinder: Brüstle, Claus, Dipl.-Ing., D-7258 Heimsheim (DE)

(56) Entgegenhaltungen:
- WO-A-90/01113
- DE-C- 3 507 095
- US-A- 1 816 787
- US-A- 4 748 567
- PATENT ABSTRACTS OF JAPAN, Band 10, Nr. 291 (M-522)[2347], 3. Oktober 1985; & JP-A-61 106 922 (ISUZU MOTORS LTD) 24-05-1986

## Beschreibung

Die Erfindung betrifft einen Abgasturbolader nach dem Oberbegriff des Anspruches 1.

Es ist allgemein bekannt, die Leistung der Turbine eines Abgasturboladers zu steuern, um einen günstigen Drehmomentverlauf in einem weiten Drehzahlbereich einer Brennkraftmaschine zu erzielen. Die Grenzen der Leistungssteuerung sind u. a. gegeben durch das Verhältnis von maximalem zu minimalem Turbinendurchsatz, dem sogenannten Schluckvermögen. Die Steuerung ist primär nur durch die Abstimmung des Schluckvermögens möglich, da bei einer vorhandenen Brennkraftmaschine der Abgasmassenstrom durch das Hubvolumen und die Drehzahl festliegt. Steigt das Abgasangebot der Brennkraftmaschine über den maximal zulässigen Turbinendurchsatz an, steigt dadurch auch die Leistungdes Turboladerverdichters und somit der Ladedruck. Um eine infolge dessen auftretende Schädigung der Brennkraftmaschine zu vermeiden, ist es bekannt, den Turboladergesamtwirkungsgrad dadurch zu senken, daß ein Teil der Abgasmenge nicht dem Turbinenrad zur Verfügung gestellt wird.

In der US-PS 18 16 787 ist ein Mechanismus zum Zuschalten bzw. Abschalten und zur Ladedrucksteuerung eines Abgasturboladers offenbart, bei dem das Einströmen von Abgas in die Turbine über Drosselklappen gesteuert wird, welche von einem einzigen Stellglied betätigt werden.
Dieses Stellglied bewegt über eine Stange die Drosselklappen von einer geöffneten in eine geschlossene Stellung. Dabei wird zunachste eine Drosselklape geschlossen, welche die Abgase in geöffneter Stellung an der Turbine vorbei ins Freie leitet. Stufenweise werden zur Ladedrucksteigerung weitere Drosselklappen nacheinander geschlossen, so daß letztendlich der gesamte Abgasstrom über eine Leitung das Turbinenrad beaufschlagt.

Aus der WO-A-90/01113 ist gemäß Artikel 54(3) EPÜ ein Abgasturbolader bekannt, welcher mittels eines einzigen Stellgliedes über ein außerhalb des Ladergehäuses liegendes Gestänge sowohl verstellbare Leitschaufeln am Eintritt als auch eine Abgasabblaseöffnung am Austritt der Turbine betätigt. Stufenweise werden dabei zunächst die Leitschaufeln bis zum Erreichen des maximalen Ladedruckes verschwenkt, anschließend wird eine außen liegende Klappe zur Abgasabblasung geöffnet.

Aufgabe der vorliegenden Erfindung ist es, einen Abgasturbolader zu schaffen, der in einem weiten Drehzahlbereich einer Brennkraftmaschine eine Anpassung an die für einen gewünschten Ladedruck erforderliche Verdichterleistung ermöglicht und dabei in möglichst einfacher Weise aufgebaut ist. Erfindungsgemäß wird die Aufgabe durch die Merkmale des Anspruchs 1 gelöst. Eine vorteilhafte Ausführung der Erfindung ist in den Unteransprüchen benannt.
Der erfindungsgemäße Abgasturbolader erlaubt es, mit einem einzigen Stellglied sowohl die Leitschaufeln am Turbineneintritt kontinuierlich zu betätigen und somit den Ladedruck über einen weiten Drehzahlbereich zu steuern, als auch eine in die Turbine integrierte Abblaseeinrichtung zu betätigen, die es ermöglicht, die Motordrehzahl weiter zu erhöhen, ohne den Ladedruck auf unzulässig hohe Werte ansteigen zu lassen. Das Problem der Abstimmung von mehreren Stellgliedern untereinander entfällt somit.
Das Stellglied kann z.B. eine übliche, pneumatische Druckdose sein, die von dem zwischen Verdichter und Brennkraftmaschine herrschenden Durck gesteuert wird. Die Integration von verstellbarer Turbinengeometrie und Abblaseeinrichtung innerhalb des Turbinengehäuses ermöglicht einen kompakten Aufbau und eine sichere Betätigung zunächst der Leitschaufeln in einem ersten Bereich und daran anschließend der Abblaseeinrichtung in einem zweiten Bereich.

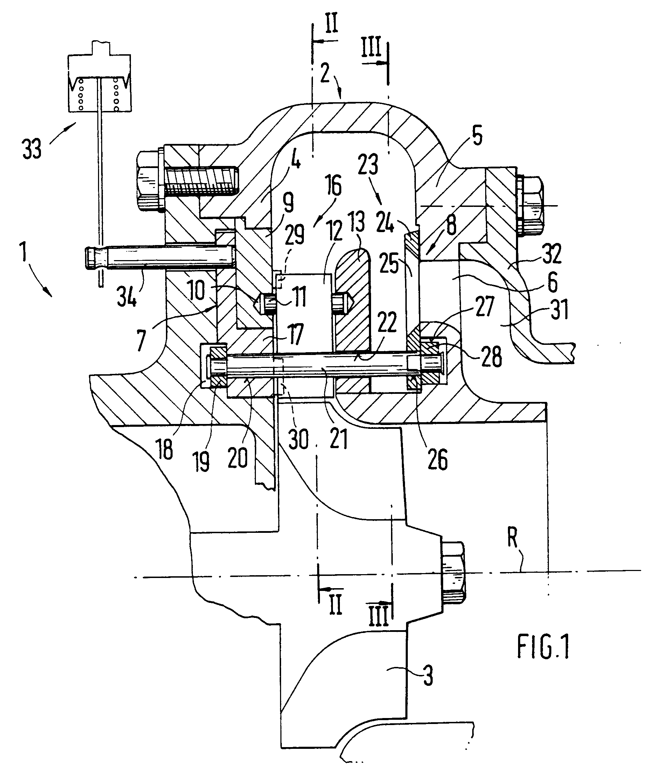

Eine beispielhafte Ausführung der Erfindung wird nachfolgend erläutert. Es zeigt
- Fig. 1: Einen Schnitt durch das Turbinengehäuse eines Turboladers,
- Fig. 2: einen Schnitt entlang der Linie II-II gemäß Fig. 1,

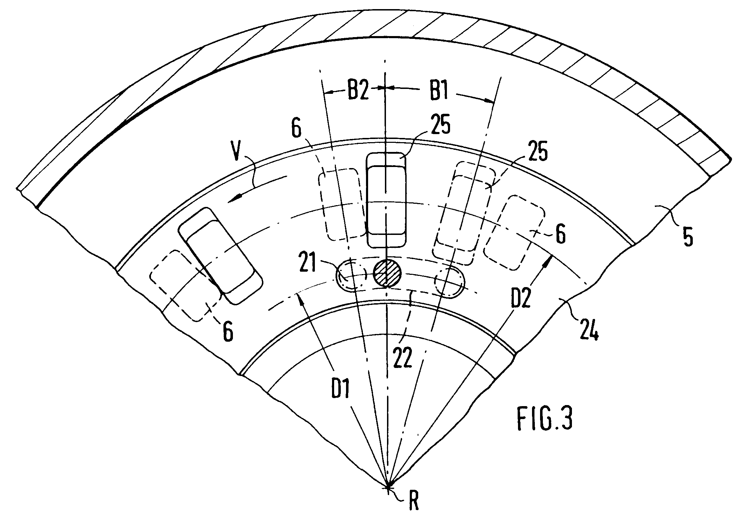

- Fig. 3: einen Schnitt entlang der Linie III-III gemäß Fig. 1,

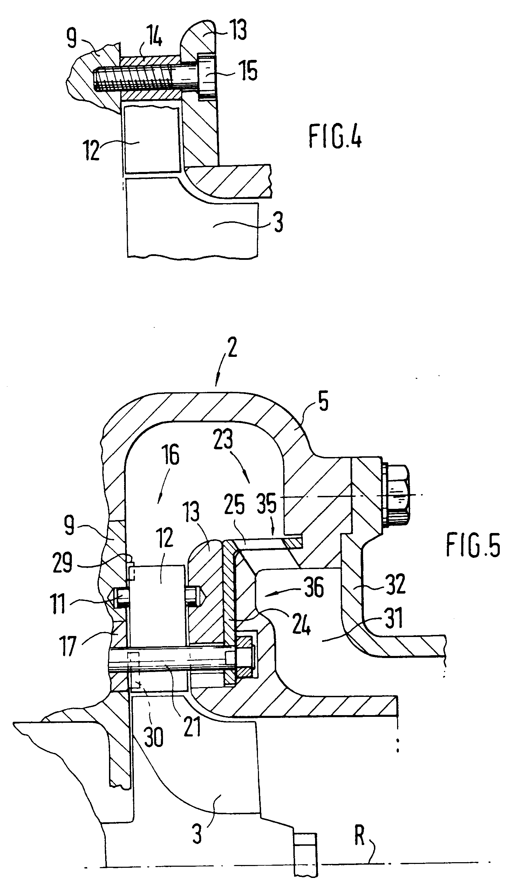

- Fig. 4: einen Schnitt durch Teile des Turbinengehäuses und
- Fig. 5: einen Schnitt durch das Turbinengehäuse einer weiteren Ausführung der Erfindung.

Ein Abgasturbolader 1 für eine nicht gezeigte Brennkraftmaschine weist ein Turbinengehäuse 2 auf, in dem ein Turbinenrad 3 drehbar um eine Rotationsachse R gelagert ist. Das Gehäuse 2 besteht u. a. aus ersten und zweiten Gehäusewänden 4, 5, wobei in der zweiten Gehäusewand 5 in einem radial äußeren Bereich D2 mehrere Öffnungen 6 angeordnet sind.

In dem Turbinengehäuse 2 ist ein Verstellmechanismus 7 zur Beeinflussung der Strömungsverhältnisse in der Turbine und eine Abblaseeinrichtung 8 für einen Teil der Abgase integriert. In der ersten Gehäusewand 4 ist ein ringförmiger Leitschaufelträger 9 angebracht, der kreisförmig angeordnete Aufnahmen 10 aufweist. In jeder Aufnahme 10 ist mit einem seiner Enden ein Bolzen 11 drehbar gelagert, auf dem eine Leitschaufel 12 befestigt ist. Das andere Ende der Bolzen 11 ist in einer parallel zwischen den Gehäusewänden 4, 5 angeordneten Trennwand 13 gelagert. Die Trennwand 13 ist mittels Distanzhülsen 14 und Schrauben 15 am Leitschaufelträger 9 befestigt. Die Länge der Hülse 14 ist geringfügig größer als die Breite der Leitschaufeln 12, so daß ein eng tolerierter Spalt zwischen den Leitschaufeln 12 und dem Leitschaufelträger 9 bzw. der Trennwand 13 entsteht. Die Gehäusewand 4 und die Trennwand 13 bilden einen Einlaßkanal 16.
Koaxial innerhalb des Leitschaufelträgers 9 ist ein Verstellring 17 drehbar um die Achse R in einer U-förmigen Ausnehmung 18 der ersten Gehäusewand 4 mit Rollen 19 gelagert. Der Verstellring 17 weist auf seinem Umfang zwei diagonal gegenüberliegende Gewinde 20 auf, in die Mitnehmerstifte 21 eingeschraubt sind. Diese Stifte 21 erstrecken sich parallel zur Achse R bis vor die gegenüberliegende Gehäusewand 5 und durchdringen dabei die Trennwand 13 in Langlöchern 22.
Die Trennwand 13 bildet zusammen mit der zweiten Gehäusewand 5 einen Nebenkanal 23. In ihm ist unmittelbar vor der Wand 5 ein um die Achse R verdrehbarer Schieber 24 angeordnet. Dieser weist in dem radial äußeren Bereich D2 Öffnungen 25 auf. Die Mitnehmerstifte 21 sind in dem Schieber 24 in einer Mitnehmeröffnung 26 gelagert und in einer Nut 27 der Wand 5 mit Rollen 28 abgestützt.
Am Leitschaufelträger 9 sind in den Einlaßkanal 16 ragende Anschläge 29 angebracht. Der Verstellring 17 weist schaufelförmige Mitnehmer 30 auf, die ebenfalls in den Einlaßkanal 16 ragen.

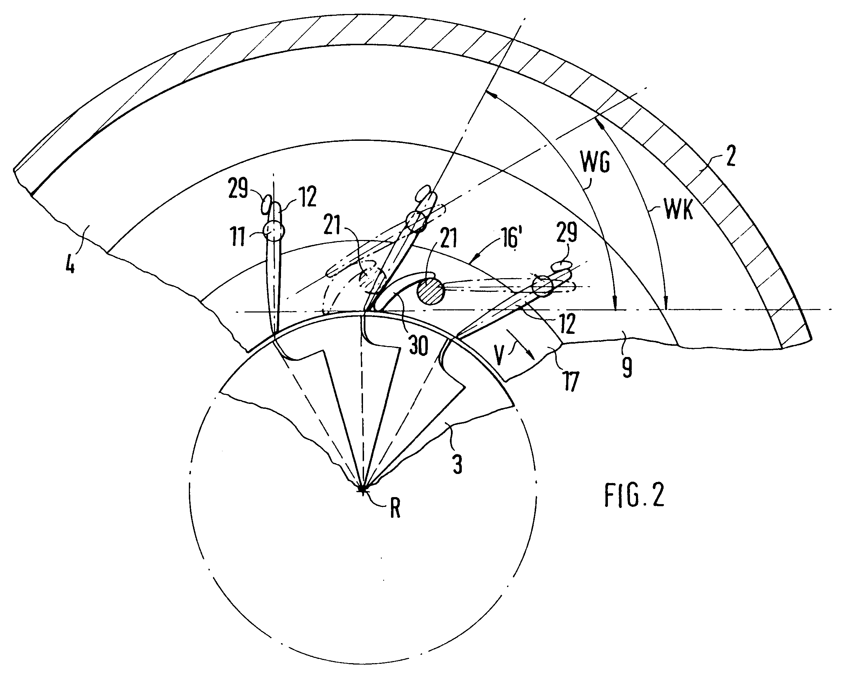

Bei einem Abgasturbolader der zuvor beschriebenen Art lassen sich die Strömungsverhältnisse der Abgase zunächst in dem Einlaßkanal 16 durch Verdrehen des Verstellringes 17 innerhalb eines ersten Bereiches B1 verändern. Die Mitnehmer 30 des Verstellringes 17 stehen dabei in Kontakt mit den drehbar gelagerten Leitschaufeln 12. Um bei niedrigen Motordrehzahlen einen möglichst hohen Ladedruck zu erzielen, muß die Turboladerdrehzahl erhöht werden. Dies gelingt durch Verringern der Turbinenschluckfähigkeit, indem der Verstellring 17 gemäß Fig. 2 entgegen der Richtung des Pfeiles V verstellt wird. Die Mitnehmer 30 drehen dabei die Leitschaufeln 12 um die Bolzen 11 im Uhrzeigersinn in die in Fig.2 gestrichelt dargestellte Stellung, d.h. die Schaufeln 12 stehen in einem kleinen Winkel WK zum Turbinenrad 3. Die dadurch entstehende, geringe Querschnittsfläche von Einlaßkanälen 16' zwischen benachbarten Leitschaufeln 12 erhöht die Strömungsgeschwindigkeit des Abgasstromes und somit die Turboladerdrehzahl.
Bei steigenden Motordrehzahlen wird der Verstellring 17 in Richtung des Pfeiles V verdreht, so daß sich der Winkel zwischen Leitschaufeln 12 und Turbinenrad 3 vergrößert. Die dadurch vergrößerte Querschnittsfäche der Einlaßkanäle 16' erhöht die Turbinenschluckfähigkeit und hält das Ladedruckniveau trotz steigender Motordrehzahl konstant. Ab einer bestimmten Stellung des Verstellringes 17 verlieren die an ihm angeordneten Mitnehmer 30 den Kontakt mit den Leitschaufeln 12, so daß diese frei in der Abgasströmung hängen und selbsttätig versuchen, einen großen Winkel zum Turbinenrad 3 einzustellen. Um die geometrisch bedingte, maximale Schluckfähigkeit nicht zu überschreiten, wird dieser durch die Anschläge 29 auf den Winkel WG begrenzt.
Bei weiter steigenden Motordrehzahlen kann der Abgasstrom im Einlaßkanal 16 nicht weiter beeinflußt werden, so daß der Ladedruck auf unzulässig hohe Werte ansteigen würde. Zur Vermeidung dieses unerwünschten Betriebszustandes wird durch das weitere Drehen des Verstellringes 17 in Richtung des Pfeiles V über den Bereich B1 hinaus mittels der Mitnehmerstifte 21 Abblaseeinrichtung 8 betätigt.

Während des zuvor beschriebenen Verdrehens des Verstellringes 17 im Bereich B1 bewegen sich die Mitnehmerstifte 21 in den Langlöchern 22 der Trennwand 13 und der Schieber 24 wird synchron zum Verstellring 17 bewegt. Die Öffnungen 25 des Schiebers 24 sind dabei nicht in Deckung mit den Öffnungen 6 der zweiten Gehäusewand 5.
Durch weiteres Drehen des Verstellringes 17 in einem Bereich B2 kommen die Öffnungen 25 und 6 zur Deckung. Somit kann ein Teilstrom des in das Turbinengehäuse 2 eintretenden Abgases durch den Nebenkanal 23 und die Öffnungen 25, 6 in einen Bypaß-Kanal 31 strömen. Er ist zwischen der Gehäusewand 5 und einem daran geschraubten Flansch 32 ausgebildet und führt die Abgase an dem Turbinenrad 3 vorbei stromabwärts in den Hauptabgasstrom zurück, der das Turbinenrad 3 antreibt. Der Schieber 24 wird radial über die Mitnehmerstifte 21 und die Rollen 28 gestützt, axial wird er durch den im Nebenkanal 23 herrschenden Druck an die Gehäusewand 5 gepreßt. Die Zumischung des Teilstromes in den Hauptabgasstrom erfolgt koaxial und somit verlustarm am Ende des Bypaß-Kanales 31.
Trotz steigender Motordrehzahl und damit steigendem Abgasangebot bleibt der Ladedruck auf einem zulässigen Niveau, da mit zunehmender Abgasmenge die Überdeckung der Öffnungen 25 und 6 zunimmt und so das überschüssige Abgas mit der Abblaseeinrichtung 8 abgeführt wird.
Bei sinkender Motordrehzahl verläuft die zuvor beschriebene Veränderung der Abgasströmungsverhältnisse in umgekehrter Reihenfolge. Zunächst verschließt der Schieber 24 im Bereich B2 die Öffnungen 25 gegenüber den Öffnungen 6, anschließend wird die Turbinengeometrie durch das Verdrehen der Leitschaufeln 12 im Bereich B1 soweit verändert, bis der Winkel WK zwischen ihnen und dem Turbinenrad 3 entsteht.
Da der Verstellring 17 sowohl den Verstellmechanismus 7 als auch die Abblaseeinrichtung 8 betätigt, ist nur ein einziges Stellglied 33 zur Betätigung des Verstellringes 17 erforderlich. Das Verdrehen des Verstellringes 17 erfolgt in bekannter Weise über dieses Stellglied 33, z.B. eine mit dem Saugrohrdruck des Motors beaufschlagte, federbelastete Membrandose und ein Gestänge oder über ein aus mehreren Regelgrößen abgeleitetes elektrisches Signal. Das Stellglied 33 wirkt über eine Achse 34 auf den Verstellring 17. In einer anderen Ausführung der Erfindung gemäß Fig. 5, ist der Schieber 24 L-förmig ausgeführt. Die Öffnung 25 ist in dem oberen, parallel zur Rotationsachse R verlaufenden Teil 35 des Schiebers 24 angeordnet. Die Verstellung der variablen Turbinengeometrie und des Schiebers 24 erfolgt in der gleichen Weise wie bei der ersten Ausführung der Erfindung. Die Gehäusewand 5 weist einen Rücksprung 36 auf, der zusammen mit dem Flansch 32 den Bypaß-Kanal 31 begrenzt.

## Patentansprüche

1. Abgasturbolader (1) an einer Brennkraftmaschine mit einer einen Verdichter antreibenden Turbine, die einen Verstellmechanismus (7) mit verstellbaren Leitschaufeln (12) zur Beeinflussung der Strömungsverhältnisse in der Turbine aufweist, wobei der Verstellmechanismus (7) und eine Abblaseeinrichtung (8), die einen Teil der Abgase an der Turbine vorbei leitet, von einem einzigen, gemeinsamen Stellglied (33) betätigbar sind, **dadurch gekennzeichnet,** daß der Verstellmechanismus (7) einen in einer ersten seitlichen Gehäusewand (4) um die Rotationsachse (R) des Turbinenrades (3) drehbaren Verstellring (17) aufweist, der mittels an ihm befestigter Mitnehmer (30) die Leitschaufeln (12) verstellt und die Abblaseeinrichtung (8) zumindest teilweise in einer gegenüberliegenden zweiten seitlichen Gehäusewand (5) des Turbinengehäuses (2) angeordnet ist.

2. Abgasturbolader nach Anspruch 1, **dadurch gekennzeichnet,** daß der Verstellring (17) mittels an ihm befestigter Mitnehmerstifte (21) die Abblaseeinrichtung (8) betätigt.

3. Abgasturbolader nach Anspruch 2, **dadurch gekennzeichnet,** daß die Abblaseeinrichtung (8) einen um die Rotationsachse (R) des Turbinenrades (3) drehbaren Schieber (24) aufweist, in dem in einem radial inneren Bereich (D1) Mitnehmeröffnungen (26) zur Aufnahme der Mitnehmerstifte (21) und in einem radial äußeren Bereich (D2) Öffnungen (25) zur Abgasabblasung angeordnet sind.

4. Abgasturbolader nach Anspruch 2, **dadurch gekennzeichnet,** daß die Abblaseeinrichtung (8) einen um die Rotationsachse (R) des Turbinenrades (3) drehbaren, L-förmigen Schieber (24) aufweist, in dem in einem radial inneren Bereich (D1) Mitnehmeröffnungen (26) zur Führung der Mitnehmerstifte (21) und in einem abgewinkelten Teil (35) Öffnungen (25) zur Abgasabblasung angeordnet sind.

5. Abgasturbolader nach Anspruch 3 oder 4, **dadurch** **gekennzeichnet,** daß innerhalb des Turbinengehäuses (2) parallel zu ersten und zweiten Gehäusewänden (4, 5) eine Trennwand (13) so angeordnet ist, daß zwischen der Trennwand (13) und der ersten Gehäusewand (4) ein Einlaßkanal (16) und zwischen der Trennwand (13) und der zweiten Gehäusewand (5) ein Nebenkanal (23) gebildet ist.

6. Abgasturbolader nach Anspruch 5, **dadurch gekennzeichnet,** daß in dem Einlaßkanal (16) die Leitschaufeln (12) mit Bolzen (11) drehbar zwischen der Trennwand (13) und einem als Leitschaufelträger (9) ausgebildeten Teil der Gehäusewand (4) aufgehängt sind.

7. Abgasturbolader nach Anspruch 3 oder 4, **dadurch** **gekennzeichnet,** daß in der Gehäusewand (5) auf einem radialen Umfang (Bereich D2) Öffnungen (6) angeordnet sind, die zusammen mit den Öffnungen (25) des Schiebers (24) einen Austritt für die Abgase aus dem Nebenkanal (23) in einen Bypaß-Kanal (31) bilden.

8. Abgasturbolader nach Anspruch 5, **dadurch gekennzeichnet,** daß sich die Mitnehmerstifte (21) parallel zur Rotationsachse (R) vom Verstellring (17) aus bis in eine Nut (27) der Gehäusewand (5) erstrecken und dabei in der Trennwand (13) angeordnete Langlöcher (22) und die Mitnehmeröffnungen (26) durchdringen und daß die Mitnehmerstifte (21) mit Rollen (28) in der Nut (27) gelagert sind.

9. Abgasturbolader nach Anspruch 1, **dadurch gekennzeichnet,** daß der Verstellring (17) in einer Ausnehmung (18) der Gehäusewand (4) mit Rollen (19) gelagert ist.

10. Abgasturbolader nach Anspruch 6, **dadurch gekennzeichnet,** daß die Trennwand (13) mittels Schrauben (15) und Distanzhülsen (14) am Leitschaufelträger (9) befestigt ist.

11. Abgasturbolader nach Anspruch 6, **dadurch gekennzeichnet,** daß die Leitschaufelverstellung durch am Leitschaufelträger (9) angeordnete Anschläge (29) begrenzt ist.

12. Abgasturbolader nach Anspruch 1, **dadurch gekennzeichnet,** daß an dem Verstellring (17) eine die erste Gehäusewand (4) durchdringende Achse (34) angeordnet ist, an der das Stellglied (33) angreift.

13. Abgasturbolader nach einem oder mehreren der vorgenannten Ansprüche, **dadurch gekennzeichnet,** daß der Verstellmechanismus (7) die Leitschaufeln (12) durch Verdrehen des Verstellringes (17) in einem ersten Bereich (B1) und die Abblaseeinrichtung (8) durch weiteres Verdrehen in einem daran anschließenden zweiten Bereich (B2) betätigt.

## Claims

1. An exhaust-gas turbocharger (1) of an internal-combustion engine, with a turbine driving a compressor and comprising an adjustment mechanism (7) with adjustable guide vanes (12) for controlling the flow ratios in the turbine, wherein the adjustment mechanism (7) and an outlet device (8) guiding part of the exhaust gases past the turbine are actuable by a single common adjustment member (33), **characterized** **in** **that** the adjustment mechanism (7) comprises an adjustment ring (17) rotatable in a first lateral housing wall (4) about the axis of rotation (R) of the turbine wheel (3) and adjusting the guide vanes (12) by means of entrainment means (30) secured thereto, and the outlet device (8) is arranged at least partially in an opposite second lateral wall (5) of the turbine housing (2).

2. An exhaust-gas turbocharger according to Claim 1, **characterized in** **that** the adjustment ring (17) actuates the outlet device (8) by means of entrainment pins (21) secured thereto.

3. An exhaust-gas turbocharger according to Claim 2, **characterized in** **that** the outlet device (8) comprises a slide (24) which is rotatable about the axis of rotation (R) of the turbine wheel (3) and in which entrainment openings (26) for receiving the entrainment pins (21) are arranged in an area (D1) radially on the inside and openings (25) for the outlet of exhaust gases are arranged in an area (D2) radially on the outside.

4. An exhaust-gas turbocharger according to Claim 2, **characterized in** **that** the outlet device (8) comprises an L-shaped slide (24) which is rotatable about the axis of rotation (R) of the turbine wheel (3) and in which entrainment openings (26) for guiding the entrainment pins (21) are arranged in an area (D1) radially on the inside and openings (25) for the outlet of exhaust gases are arranged in an angled portion (35).

5. An exhaust-gas turbocharger according to Claim 3 or 4, **characterized in** **that** a partition wall (13) is arranged inside the turbine housing (2) parallel to the first and second housing walls (4, 5) in such a way that an inlet duct (16) is formed between the partition wall (13) and the first housing wall (4) and a secondary duct (23) is formed between the partition wall (13) and the second housing wall (5).

6. An exhaust-gas turbocharger according to Claim 5, **characterized in** **that** in the inlet duct (16) the guide vanes (12) are suspended by pins (11) so as to be rotatable between the partition wall (13) and part of the housing wall (4) constructed in the form of a guide-vane support (9).

7. An exhaust-gas turbocharger according to Claim 3 or 4, **characterized in** **that** openings (6), which together with the openings (25) of the slide (24) form an escape for the exhaust gases from the secondary duct (23) into a bypass duct (31), are provided in the housing wall (5) on a radial periphery (area D2).

8. An exhaust-gas turbocharger according to Claim 5, **characterized in that** the entrainment pins (21) extend parallel to the axis of rotation (R) from the adjustment ring (17) into a groove (27) in the housing wall (5) and pass through the entrainment openings (26) and elongate holes (22) provided in the partition wall (13), and the entrainment pins (21) are mounted with rollers (28) in the groove (27).

9. An exhaust-gas turbocharger according to Claim 1, **characterized in that** the adjustment ring (17) is mounted with rollers (19) in a recess (18) in the housing wall (4).

10. An exhaust-gas turbocharger according to Claim 6, **characterized in that** the partition wall (13) is secured to the guide-vane support (9) by means of bolts (15) and spacer sleeves (14).

11. An exhaust-gas turbocharger according to Claim 6, **characterized in that** the adjustment of the guide vanes is limited by stops (29) arranged on the guide-vane support (9).

12. An exhaust-gas turbocharger according to Claim 1, **characterized in that** a shaft (34), which passes through the first housing wall (4) and on which the adjustment member (33) engages, is arranged on the adjustment ring (17).

13. An exhaust-gas turbocharger according to one or more of the preceding Claims, **characterized in that** the adjustment mechanism (7) actuates the guide vanes (12) by turning the adjustment ring (17) in a first area (B1) and the outlet device (8) by further turning in a second area (B2) adjacent thereto.

## Revendications

1. Turbocompresseur (1) pour moteur à combustion interne à turbine entraînée par un compresseur, qui comporte un mécanisme de réglage (7) avec des palettes déflectrices réglables (12) pour avoir une influence sur les conditions de l'écoulement dans la turbine, le mécanisme de réglage (7) et un dispositif de décharge (8) qui fait passer une partie des gaz d'échappement au-delà de la turbine, pouvant être actionnés au moyen d'un unique organe de réglage commun (33), caractérisé en ce que le mécanisme de réglage (7) comprend un anneau de réglage (17) pouvant tourner autour de l'axe de rotation (R) de la roue (3) de la turbine dans une première paroi latérale (4) du carter, anneau qui règle au moyen d'éléments d'entraînement (30) fixés sur lui les palettes déflectrices (12), le dispositif de décharge (8) étant disposé au moins partiellement dans une seconde paroi latérale opposée (5) du carter de la turbine.

2. Turbocompresseur selon la revendication 1, caractérisé en ce que l'anneau de réglage (17) actionne le dispositif de décharge (8) au moyen de tiges d'entraînement (21) fixées sur lui.

3. Turbocompresseur selon la revendication 2, caractérisé en ce que le dispositif de décharge (8) comprend un coulisseau pouvant tourner autour de l'axe de rotation (R) de la roue (3) de la turbine, dans lequel sont prévues dans une région radiale interne (D1) des ouvertures d'entraînement (26) destinées à la réception des tiges d'entraînement (21) et dans une région radialement externe (D2) des ouvertures (25) pour la décharge des gaz d'échappement.

4. Turbocompresseur selon la revendication 2, caractérisé en ce que le dispositif de décharge (8) comprend un coulisseau en forme de L (24) pouvant tourner autour de l'axe de rotation (R) de la roue (3) de la turbine, coulisseau dans lequel sont prévues dans une région radialement à l'intérieur (D1) des ouvertures d'entraînement (26) destinées au guidage des tiges d'entraînement (21), et dans une partie coudée (35) des ouvertures (25) pour la décharge des gaz d'échappement.

5. Turbocompresseur selon la revendication 3 ou 4, caractérisé en ce qu'à l'intérieur du carter (2) de la turbine est disposée une paroi séparatrice (13) parallèle à la première et à la seconde parois (4, 5) du carter de manière qu'entre la paroi séparatrice (13) et la première paroi (4) du carter soit formé un canal d'admission (16), et entre la paroi séparatrice (13) et la seconde paroi (5) du carter un canal auxiliaire (23).

6. Turbocompresseur selon la revendication 5, caractérisé en ce que les palettes déflectrices (12) sont suspendues dans le canal d'admission (16) par des tourillons (11) de façon à pouvoir tourner entre la paroi séparatrice (13) et une partie de la partie de la paroi (4) du carter qui est constituée sous forme d'un support (9) pour les palettes déflectrices.

7. Turbocompresseur selon la revendication 3 ou 4, caractérisé en ce que des ouvertures (6) de la paroi (5) du carter sont constituées dans une région périphérique radiale (région D2) de la paroi (5) du carter, qui forment avec les ouvertures (25) du coulisseau (24) une sortie pour les gaz d'échappement provenant du canal auxiliaire (23) vers un canal de dérivation (31).

8. Turbocompresseur selon la revendication 5, caractérisé en ce que les tiges d'entraînement (21) s'étendent parallèlement à l'axe de rotation à l'axe de rotation (R) de l'anneau de réglage (17) jusqu'à une rainure (27) de la paroi (5) du carter et traversent de ce fait des trous allongés (22) prévus dans la paroi séparatrice (13) et les ouvertures d'entraînement (26), et en ce que les tiges d'entraînement (21) sont montées dans la rainure (27) au moyen de galets (28).

9. Turbocompresseur selon la revendication 1, caractérisé en ce que l'anneau de réglage (17) est monté par des galets (19) dans un évidement (18) de la paroi (4) du carter.

10. Turbocompresseur selon la revendication 6, caractérisé en ce que la paroi séparatrice (13) est fixée par des boulons (15) et des douilles d'écartement (14) sur le support (9) des palettes déflectrices.

11. Turbocompresseur selon la revendication 6, caractérisé en ce que le déplacement des palettes déflectrices est limité par des butées (29) prévues sur le support (9) des palettes déflectrices.

12. Turbocompresseur selon la revendication 1, caractérisé en ce qu'un axe (34) traversant la première paroi (4) du carter est monté dans l'anneau de réglage (17), axe auquel est relié l'organe de réglage (33).

13. Turbocompresseur selon l'une ou plusieurs des revendications précédentes, caractérisé en ce que le mécanisme de réglage (7) actionne les palettes déflectrices (12) par rotation de l'anneau de réglage (17) dans une première région (B1), et le dispositif de décharge (8) par la poursuite de la rotation dans une seconde région (B2) qui suit la première.
